# EUROPÄISCHE PATENTANMELDUNG

(11) **EP 4 775 456 A1**
(43) Veröffentlichungstag der Anmeldung: **15.07.2026**
(21) Anmeldenummer: 25224361.3
(22) Anmeldetag: 17.12.2025
(51) Int. Cl.: B60R 16/03, B60W 50/023, H02J 1/08, H02J 1/082, B60W 50/02

(54) **SYSTEM ZUR VERSORGUNG EINER SICHERHEITSRELEVANTEN KOMPONENTE**

(30) Priorität: 13.01.2025 DE 102025100970
(71) Anmelder: LEONI Bordnetz-Systeme GmbH, 97318 Kitzingen (DE)
(72) Erfinder: Chalil, Tzeichoun, 97353 Wiesentheid (DE); Wessner, Tobias, 97857 Urspringen (DE); Mehl, Stephan, 91077 Neunkirchen (DE); Holzmann, Frédéric, 97084 Würzburg (DE)
(74) Vertreter: Frenkel, Matthias Alexander

(57) **Zusammenfassung**

Es wird ein System zur Versorgung mindestens einer sicherheitsrelevanten Komponente in einem Bordnetz eines Fahrzeugs beschrieben. Das System weist mindestens eine erste Energiequelle und eine zweite Energiequelle zur Bereitstellung elektrischer Energie sowie mindestens drei Sicherheitsschaltvorrichtung mit jeweils mindestens einem steuerbaren ersten Versorgungsanschluss und einem steuerbaren zweiten Versorgungsanschluss zur Aufnahme und Weiterleitung elektrischer Energie und mindestens einem steuerbaren Verbraucheranschluss zur Versorgung mindestens eines Verbrauchers. Die Sicherheitsschaltvorrichtungen sind als eine Reihenschaltung angeordnet und miteinander verbunden. Die erste Energiequelle und die zweite Energiequelle sind derart mit den Sicherheitsschaltvorrichtungen verbunden, dass die Bereitstellung der elektrischen Energie als eine zweiseitige Einspeisung erfolgt.

## Beschreibung

Die vorliegende Erfindung betrifft im Allgemeinen eine Versorgung einer sicherheitsrelevanten Komponente. Insbesondere betrifft die vorliegende Erfindung ein System zur Versorgung mindestens einer sicherheitsrelevanten Komponente in einem Bordnetz eines Fahrzeugs.

Der Betrieb eines Fahrzeugs hängt von der Zusammenarbeit von Funktionskomponenten an verschiedenen Stellen im Fahrzeug ab. In modernen Fahrzeugen wird aufgrund ihrer Kosteneffizienz, Raumeffizienz und Flexibilität zunehmend digitale Netzwerktechnologie für die Fahrzeugkommunikation genutzt. Mit Hilfe digitalisierter Steuerung wird eine Vielzahl von Funktionen realisiert.

Die technologischen Anforderungen und die damit stark steigende Komplexität elektronischer Komponenten im Fahrzeug erhöhen das Risiko von gefahrbringenden Fehlfunktionen.

Die Norm ISO 26262 definiert in diesem Zusammenhang notwendige Prozesse und Aktivitäten, Methoden und Arbeitsprodukte für die Entwicklung und Produktion von sicherheitsrelevanten elektrischen und/oder elektronischen Systemen in Kraftfahrzeugen.

Die Systeme in einem Fahrzeug werden nach ISO 26262 hinsichtlich des Risikos einer möglichen Gefährdung analysiert, wobei insbesondere der Schweregrad, die Exposition, d. h. die Zeit, die ein Fahrzeug der Möglichkeit des Eintretens einer Gefährdung ausgesetzt ist, und die Beherrschbarkeit des Fahrzeugs in einem solchen Zustand untersucht werden. Die Systeme werden anschließend entsprechend ihres Gefährdungspotentials in ASIL (Automotiv Safety Integrity Level) -Kategorien eingeordnet, wobei ein System der Kategorie ASIL-D ein besonders sicherheitsrelevantes System darstellt und daher besonders abzusichern ist.

Solche sicherheitsrelevanten Systeme, im Folgenden auch sicherheitsrelevante Komponenten genannt, sind z.B. die sensorgesteuerte Auslösung der Airbags, ein elektronisches Lenksystem (Steer-by-Wire), ein Antiblockiersystem (ABS) oder die elektronische Motorsteuerung. Fehlfunktionen solcher sicherheitsrelevanten haben dabei ein wahrscheinliches Potential für schwerwiegende und lebensbedrohliche oder tödliche Verletzungen.

Um solche Fehlfunktionen zu vermeiden, werden sicherheitsrelevante Komponenten typischerweise redundant ausgelegt und separat angesteuert. Die Versorgung der sicherheitsrelevanten Komponenten kann dabei entweder durch ein völlig autarkes System ohne weitere Verbraucher oder durch ein System mit weiteren Verbrauchern erfolgen. Die Versorgung der sicherheitsrelevanten Komponenten durch ein völlig autarkes System hat hierbei den Nachteil, dass es aufgrund der hohen Anzahl von sicherheitsrelevanten Systemen und weiteren Verbrauchern eine Vielzahl von Versorgungssystemen erforderlich ist, was einerseits das Gewicht des Fahrzeugs negativ beeinflusst und andererseits die Komplexität des gesamten Bordnetzes des Fahrzeugs deutlich erhöht.

Die Versorgung der sicherheitsrelevanten Komponenten durch ein System mit weiteren Verbrauchern kann insbesondere den Nachteil haben, dass sich eine Fehlfunktion eines weiteren Verbrauchers negativ auf die Sicherheitsintegrität der sicherheitsrelevanten Komponente auswirken kann.

Die DE 10 2015 222 545 A1 beschreibt in diesem Zusammenhang ein Bordnetz für ein Kraftfahrzeug, das ein erstes Teilbordnetz mit einer Hauptleitung aufweist, wobei an der Hauptleitung eine erste Schalteinrichtung und eine zweite Schalteinrichtung angeordnet und in Reihe geschaltet sind, wobei jede Schalteinrichtung einen Knoten aufweist, an dem jeweils mindestens eine von der Hauptleitung abzweigende Nebenleitung angeschlossen ist, wobei an einer ersten Nebenleitung, die von dem Knoten der ersten Schalteinrichtung abgezweigt ist, ein erster Verbraucher angeschlossen ist, wobei an einer zweiten Nebenleitung, die in der zweiten Schalteinrichtung von der Hauptleitung abgezweigt ist, ein zweiter Verbraucher angeschlossen ist, wobei der erste und der zweite Verbraucher zueinander redundant ausgebildet sind.

Es besteht daher ein Bedarf an einem verbesserten System zur Versorgung einer sicherheitsrelevanten Komponente bei gleichzeitiger Versorgung weiterer Verbraucher in dem System.

Die Lösung des Problems wird durch den Gegenstand des beigefügten unabhängigen Patentanspruchs erreicht.

Gemäß einem Aspekt der Erfindung wird ein System zur Versorgung mindestens einer sicherheitsrelevanten Komponente in einem Bordnetz eines Fahrzeugs bereitgestellt. Das System weist mindestens eine erste Energiequelle zur Bereitstellung elektrischer Energie auf. Das System weist mindestens eine zweite Energiequelle zur Bereitstellung elektrischer Energie auf. Das System weist weiterhin eine erste Sicherheitsschaltvorrichtung auf. Die erste Sicherheitsschaltvorrichtung weist mindestens einen steuerbaren ersten Versorgungsanschluss zur Aufnahme und Weiterleitung elektrischer Energie auf. Die erste Sicherheitsschaltvorrichtung weist mindestens einen steuerbaren zweiten Versorgungsanschluss zur Aufnahme und Weiterleitung elektrischer Energie auf. Die erste Sicherheitsschaltvorrichtung weist mindestens einen steuerbaren Verbraucheranschluss zur Versorgung mindestens eines Verbrauchers auf. Das System weist weiterhin eine zweite Sicherheitsschaltvorrichtung auf. Die zweite Sicherheitsschaltvorrichtung weist mindestens einen steuerbaren ersten Versorgungsanschluss zur Aufnahme und Weiterleitung elektrischer Energie auf. Die zweite Sicherheitsschaltvorrichtung weist mindestens einen steuerbaren zweiten Versorgungsanschluss zur Aufnahme und Weiterleitung elektrischer Energie auf. Die zweite Sicherheitsschaltvorrichtung weist mindestens einen steuerbaren Verbraucheranschluss zur Versorgung mindestens eines Verbrauchers auf. Das System weist weiterhin eine dritte Sicherheitsschaltvorrichtung auf. Die dritte Sicherheitsschaltvorrichtung weist mindestens einen steuerbaren ersten Versorgungsanschluss zur Aufnahme und Weiterleitung elektrischer Energie auf. Die dritte Sicherheitsschaltvorrichtung weist mindestens einen steuerbaren zweiten Versorgungsanschluss zur Aufnahme und Weiterleitung elektrischer Energie auf. Die dritte Sicherheitsschaltvorrichtung weist mindestens einen steuerbaren Verbraucheranschluss zur Versorgung mindestens eines Verbrauchers auf.

Die Sicherheitsschaltvorrichtungen sind als eine Reihenschaltung angeordnet und miteinander verbunden. Anders ausgedrückt, die erste Sicherheitsschaltvorrichtung, die zweite Sicherheitsschaltvorrichtung und die dritte Sicherheitsschaltvorrichtung sind als eine Reihenschaltung angeordnet und miteinander verbunden.

In einer Variante kann der zweite Versorgungsanschluss der ersten Sicherheitsschaltvorrichtung mit dem ersten Versorgungsanschluss der zweiten Sicherheitsschaltvorrichtung verbunden sein. Der zweite Versorgungsanschluss der zweiten Sicherheitsschaltvorrichtung kann in dieser Variante mit dem ersten Versorgunganschluss der dritten Sicherheitsschaltvorrichtung verbunden sein.

In einer weiteren Variante kann der zweite Versorgungsanschluss der ersten Sicherheitsschaltvorrichtung mit dem ersten Versorgungsanschluss der dritten Sicherheitsschaltvorrichtung verbunden sein. Der zweite Versorgungsanschluss der dritten Sicherheitsschaltvorrichtung kann in dieser Variante mit dem ersten Versorgunganschluss der zweiten Sicherheitsschaltvorrichtung verbunden sein

Die zweite Energiequelle ist mit dem zweiten Versorgungsanschluss der dritten Sicherheitsschaltvorrichtung verbunden. Alternativ oder zusätzlich ist die zweite Energiequelle mit dem zweiten Versorgungsanschluss der zweiten Sicherheitsschaltvorrichtung verbunden. Die erste Energiequelle ist mit dem ersten Versorgungsanschluss der ersten Sicherheitsschaltvorrichtung verbunden. Die erste Energiequelle und die zweite Energiequelle sind dabei derart mit der ersten Sicherheitsschaltvorrichtung und der dritten Sicherheitsschaltvorrichtung oder der zweiten Sicherheitsschaltvorrichtung verbunden, dass die Bereitstellung der elektrischen Energie durch die erste Energiequelle und die zweite Energiequelle als eine zweiseitige Einspeisung erfolgt. Das System weist weiterhin die sicherheitsrelevante Komponente auf. Die sicherheitsrelevante Komponente weist dabei mindestens einen ersten Verbraucher auf. Die sicherheitsrelevante Komponente weist weiterhin mindestens einen zweiten Verbraucher auf. Der zweite Verbraucher ist redundant zu dem ersten Verbraucher ausgebildet. Der erste Verbraucher ist mit dem Verbraucheranschluss der ersten Sicherheitsschaltvorrichtung verbunden. Der zweite Verbraucher ist mit dem Verbraucheranschluss der zweiten Sicherheitsschaltvorrichtung verbunden. Alternativ oder zusätzlich ist der zweite Verbraucher mit dem Verbraucheranschluss der dritten Sicherheitsschaltvorrichtung verbunden. Das System weist weiterhin mindestens einen dritten Verbraucher auf. Der dritte Verbraucher ist mit dem Verbraucheranschluss der dritten Sicherheitsschaltvorrichtung verbunden. Alternativ oder zusätzlich ist der dritte Verbraucher mit dem Verbraucheranschluss der zweiten Sicherheitsschaltvorrichtung verbunden.

Die Formulierung "die Sicherheitsschaltvorrichtungen" ist dabei gleichzusetzen mit der einzelnen Aufzählung der ersten Sicherheitsschaltvorrichtung, der zweiten Sicherheitsschaltvorrichtung und der dritten Sicherheitsschaltvorrichtung und dient lediglich der Verbesserung der Übersichtlichkeit und Lesbarkeit. Es können auch mehr als die genannten drei Sicherheitsschaltvorrichtungen in dem System vorgesehen sein. Grundsätzlich ist eine Formulierung, die eine Mehrzahl von Komponenten definiert, gleichzusetzen mit einer einzelnen Aufzählung spezifischer Komponenten, wie sie in Art und Umfang in der jeweiligen Ausführungsform definiert sind.

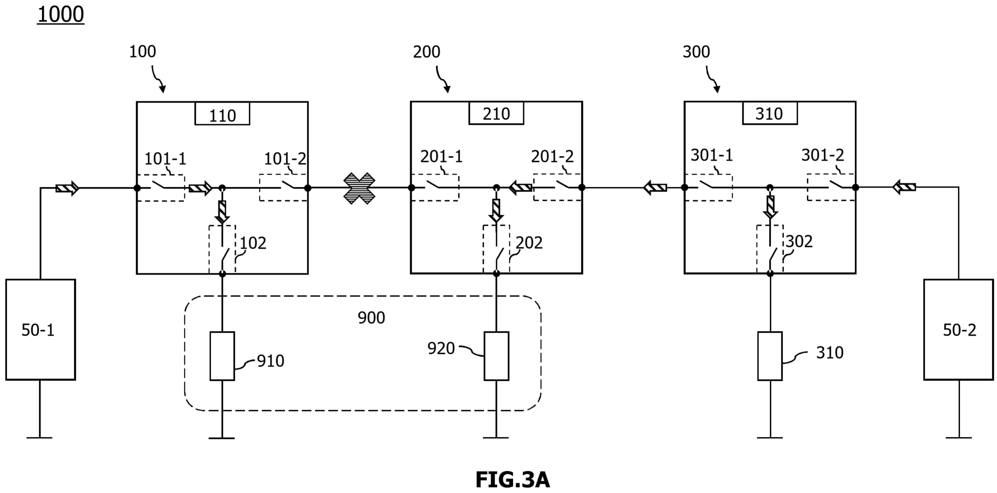

Die Anordnung der Sicherheitsschaltvorrichtungen und der Energiequellen als eine Reihenschaltung, bei der die Bereitstellung der Energie als eine zweiseitige Einspeisung und damit von beiden Seiten in die Reihenschaltung erfolgt und bei der die Sicherheitsschaltvorrichtungen, die die Verbraucher der sicherheitsrelevanten Komponente versorgen, unmittelbar miteinander verbunden sind, ermöglicht insbesondere, dass mindestens einer der Verbraucher der sicherheitsrelevanten Komponente auch dann mit elektrischer Energie versorgt wird, wenn ein oder mehrere Fehler im System auftreten. Fehler können hierbei insbesondere ein Kurzschluss oder ein Leerlauf sein. Eine detaillierte Beschreibung beispielhafter Fehlerszenarien ist in der Beschreibung zu den Figuren 3A bis 3F enthalten.

Zur Beschreibung der Ausfallsicherheit der sicherheitsrelevanten Komponente wird im Folgenden der Begriff der Sicherheitsintegrität verwendet. Eine hohe Sicherheitsintegrität definiert dabei eine geringe Ausfallwahrscheinlichkeit der sicherheitsrelevanten Komponente. Die höchste Sicherheitsintegrität ist insbesondere dann gegeben, wenn beide Verbraucher der sicherheitsrelevanten Komponente jeweils von beiden Energiequellen mit elektrischer Energie versorgt werden können.

Steuerbar bedeutet hierin, dass der jeweilige Versorgungsanschluss oder der Verbraucheranschluss einer Sicherheitsschaltvorrichtung aktiv oder inaktiv geschaltet werden kann. Ein Versorgungsanschluss ist aktiv, wenn er elektrische Energie in die Sicherheitsschaltvorrichtung aufnimmt oder elektrische Energie über den Versorgungsanschluss nach außen abgibt. Ein Verbraucheranschluss ist aktiv, wenn ein an den Verbraucheranschluss angeschlossener Verbraucher durch den Verbraucheranschluss mit elektrischer Energie versorgt wird. In anderen Worten definiert der Begriff steuerbar, dass ein steuerbarer Anschluss, z.B. der Versorgungs- und/oder Verbraucheranschluss, eine Schaltfunktionalität aufweist, über die der jeweilige Anschluss in einen leitenden, aktiven Zustand oder einen nicht-leitenden, inaktiven Zustand geschaltet werden kann.

Diese Steuerbarkeit der Anschlüsse ermöglicht es insbesondere, dass Fehler im System entkoppelt werden können, ohne dass diese sich auf die restlichen Systemanteile auswirken. Beispielsweise kann ein Kurzschluss in dem dritten Verbraucher vom System entkoppelt werden, sodass weiterhin eine Bereitstellung der elektrischen Energie für die sicherheitsrelevante Komponente über die erste und die zweite Energiequelle erfolgen kann. Ohne eine derartige Entkopplung könnte eine Bereitstellung der elektrischen Energie für die sicherheitsrelevante Komponente lediglich über die erste Energiequelle erfolgen, wodurch die Sicherheitsintegrität der sicherheitsrelevanten Komponente reduziert würde.

Zu diesem Zweck kann das System eine Steuerung aufweisen, die alle Anschlüsse in allen Sicherheitsschaltvorrichtungen steuert. Alternativ oder zusätzlich kann jede der Sicherheitsschaltvorrichtungen eine integrierte Steuerung zur Steuerung der jeweiligen Anschlüsse aufweisen.

Die Weiterleitung der elektrischen Energie durch die jeweiligen Versorgungsanschlüsse der Sicherheitsschaltvorrichtungen definiert dabei einerseits die Abgabe der elektrischen Energie aus der Sicherheitsschaltvorrichtung an z.B. die benachbarte Sicherheitsschaltvorrichtung und andererseits die Weiterleitung aufgenommener elektrischer Energie an die weiteren Anschlüsse, z.B. den weiteren Versorgungsanschluss und/oder den Verbraucheranschluss, in der Sicherheitsschaltvorrichtung. Mit anderen Worten kann elektrische Energie, die an einem ersten Versorgungsanschluss aufgenommen wurde, an einen zweiten Versorgungsanschluss oder den Verbraucheranschluss innerhalb der gleichen Sicherheitsschaltvorrichtung weitergeleitet und dort abgegeben werden.

Die Sicherheitsschaltvorrichtungen können in einer Variante als Zonensteuergeräte ausgebildet sein oder ein Zonensteuergerät umfassen oder Teil eines Zonensteuergeräts sein. Die Sicherheitsschaltvorrichtungen können in dieser Variante über einen Systembus miteinander verbunden sein. Die Verbraucher können in einer Variante über einen Systembus mit den Sicherheitsschaltvorrichtungen verbunden sein. Ein solcher Systembus kann ein CAN-Bus, ein LIN-Bus, ein MOST-Bus, ein FlexRay-Bus und/oder ein Ethernet-Bus sein.

In einer weiteren Variante können die Sicherheitsschaltvorrichtungen als eine Halbleiterschaltungen ausgebildet sein oder eine Halbleitschaltung umfassen.

In einer Variante kann das Bordnetz ein 48V Bordnetz sein.

Die Energiequellen können jeweils als eine Batterie ausgebildet sein oder eine Batterie umfassen. Zusätzlich oder alternativ können die Energiequellen jeweils als DC/DC - Wandler ausgebildet sein oder DC/DC - Wandler umfassen. Die Verwendung eines DC/DC - Wandlers bietet den Vorteil, dass keine zusätzliche Batterie für die Versorgung der sicherheitsrelevanten Komponente und der weiteren Verbraucher erforderlich ist. Mit dem DC/DC- Wandler kann die Energie einer bereits vorhandenen Batterie, z.B. einer Starterbatterie oder einer Versorgungsbatterie in Elektrofahrzeugen, genutzt werden, wobei die Spannung durch den DC/DC - Wandler auf die für das Bordnetz erforderliche Spannung gewandelt wird. Die Energiequellen können in einer Variante unterschiedlich ausgebildet sein. So kann in einer Variante die erste Energiequelle als eine Batterie ausgebildet sein oder eine Batterie umfassen und die zweite Energiequelle als ein DC/DC - Wandler ausgebildet sein oder einen DC/DC-Wandler umfassen, oder umgekehrt. Die Energiequellen können eine Steuerung aufweisen, die dazu eingerichtet ist, eine Abgabe elektrischer Energie aus den Energiequellen zu steuern.

Die sicherheitsrelevante Komponente kann eine als ASIL- D eingestufte Komponente gemäß ISO 26262 aufweisen oder als eine als ASIL-D eingestufte Komponente ausgebildet sein. In einer Variante kann die sicherheitsrelevante Komponente eine als ASIL-D und/oder ASIL-C eingestufte Komponente aufweisen oder als eine als ASIL-D oder als ASIL-C eingestufte Komponente ausgebildet sein

Der dritte Verbraucher kann als ein Nebenverbraucher ausgebildet sein oder einen Nebenverbraucher umfassen. Ein solcher Nebenverbraucher kann insbesondere einen als ASIL-A bis ASIL-C eingestuften Verbraucher aufweisen oder als ein solcher Verbraucher ausgebildet sein. Ein solcher Nebenverbraucher kann auch als Komfortverbraucher bezeichnet werden und stellt keine sicherheitsrelevante Komponente des Systems dar. In einer Variante kann der Nebenverbraucher einen als ASIL-A bis ASIL-B eingestuften Verbraucher aufweisen oder als ein solcher Verbraucher ausgebildet sein.

Nebenverbraucher können dabei z.B. aktive Fahrwerkskomponenten, Frontscheinwerfer, Heckscheinwerfer, digitale Fahrzeuginstrumente, Abstandwarner, Tempomat, Bremslichter, Heckscheinwerfer, Rückfahrkamera und andere Verbraucher sein.

In einer Variante kann die dritte Sicherheitsschaltvorrichtung eine erste Bypass-Schaltung aufweisen. Die erste Bypass-Schaltung kann dazu eingerichtet und ausgebildet sein, den ersten Versorgungsanschluss der dritten Sicherheitsschaltvorrichtung und den zweiten Versorgungsanschluss der dritten Sicherheitsschaltvorrichtung steuerbar zu überbrücken. Überbrücken bedeutet in diesem Zusammenhang, dass ein Kurzschluss zwischen dem ersten Versorgungsanschluss der dritten Sicherheitsschaltvorrichtung und dem zweiten Versorgungsanschluss der dritten Sicherheitsschaltvorrichtung hergestellt wird. Die Bypass-Schaltung kann den ersten Versorgungsanschluss der dritten Sicherheitsschaltvorrichtung und den zweiten Versorgungsanschluss der dritten Sicherheitsschaltvorrichtung dabei derart kurzschließen, dass elektrische Energie durch die dritte Sicherheitsschaltvorrichtung fließen kann. Die elektrische Energie kann dabei durch die dritte Sicherheitsschaltvorrichtung fließen, auch wenn sich der erste und/oder der zweite Versorgungsanschluss der dritten Sicherheitsschaltvorrichtung in einem inaktiven, nicht-leitenden Zustand befinden.

Dies bietet insbesondere den Vorteil, dass auch bei einer Fehlfunktion einer der beiden Versorgungsanschlüsse der dritten Sicherheitsschaltvorrichtung, wie beispielsweise einer defekten Ansteuerbarkeit der Versorgungsanschlüsse, eine Weiterleitung der elektrischen Energie von der zweiten Energiequelle zur ersten Sicherheitsschaltvorrichtung und zur zweiten Sicherheitsschaltvorrichtung durch die dritte Sicherheitsschaltvorrichtung gewährleistet ist.

In einer weiteren Variante kann die erste Sicherheitsschaltvorrichtung eine erste Bypass-Schaltung aufweisen. In einer weiteren Variante kann die zweite Sicherheitsschaltvorrichtung eine erste Bypass-Schaltung aufweisen. In noch einer weiteren Variante können alle Sicherheitsschaltvorrichtungen des Systems eine erste Bypass-Schaltung aufweisen.

In einer Variante kann die dritte Sicherheitsschaltvorrichtung zusätzlich mindestens einen steuerbaren dritten Versorgungsanschluss aufweisen.

In einer Variante kann das System mindestens eine vierte Sicherheitsschaltvorrichtung aufweisen. Die vierte Sicherheitsschaltvorrichtung kann mindestens einen steuerbaren ersten Versorgungsanschluss aufweisen. Die vierte Sicherheitsschaltvorrichtung kann mindestens einen steuerbaren zweiten Versorgungsanschluss aufweisen. Die vierte Sicherheitsschaltvorrichtung kann mindestens einen steuerbaren Verbraucheranschluss aufweisen. Die vierte Sicherheitsschaltvorrichtung kann zwischen der dritten Sicherheitsschaltvorrichtung und der zweiten Energiequelle angeordnet sein. Der zweite Versorgungsanschluss der vierten Sicherheitsschaltvorrichtung kann in diesem Fall mit der zweiten Energiequelle verbunden sein. Der erste Versorgungsanschluss der vierten Sicherheitsschaltvorrichtung kann mit dem zweiten Versorgungsanschluss der dritten Sicherheitsschaltvorrichtung verbunden sein. In dieser Variante kann der zweite Versorgungsanschluss der dritten Sicherheitsschaltvorrichtung nicht mit der zweiten Energiequelle verbunden sein.

In einer Variante kann die vierte Sicherheitsschaltvorrichtung zwischen der dritten Sicherheitsschaltvorrichtung und der zweiten Sicherheitsschaltvorrichtung angeordnet sein. Der zweite Versorgungsanschluss der vierten Sicherheitsschaltvorrichtung kann in diesem Fall mit dem ersten Versorgungsanschluss der zweiten Sicherheitsschaltvorrichtung verbunden sein. In dieser Variante kann der zweite Versorgungsanschluss der dritten Sicherheitsschaltvorrichtung nicht mit dem ersten Versorgungsanschluss der zweiten Sicherheitsschaltvorrichtung verbunden sein, sondern beispielsweise mit ersten Versorgungsanschluss der vierten Sicherheitsschaltvorrichtung. In dieser Variante kann beispielsweise der erste Verbraucher mit dem Verbraucheranschluss der ersten Sicherheitsschaltvorrichtung verbunden sein und kann der zweite Verbraucher mit dem Verbraucheranschluss der zweiten Sicherheitsschaltvorrichtung verbunden sein.

Das System kann weiterhin einen vierten Verbraucher aufweisen. Der vierte Verbraucher kann an den Verbraucheranschluss der vierten Sicherheitsschaltvorrichtung angeschlossen sein. Der vierte Verbraucher kann als ein Nebenverbraucher ausgebildet sein oder einen Nebenverbraucher aufweisen.

Das System kann weiterhin eine zweite Bypass-Schaltung aufweisen. Die zweite Bypass-Schaltung kann mit dem dritten Versorgungsanschluss der dritten Sicherheitsschaltvorrichtung und der zweiten Energiequelle verbunden sein. In einer Variante, in der der zweite Versorgungsanschluss der dritten Sicherheitsschaltvorrichtung mit dem ersten Versorgungsanschluss der vierten Sicherheitsschaltvorrichtung verbunden ist, kann die zweite Bypass-Schaltung dazu eingerichtet und ausgebildet sein, die vierte Sicherheitsschaltvorrichtung derart gesteuert zu überbrücken, dass elektrische Energie von der zweiten Energiequelle in die dritte Sicherheitsschaltvorrichtung fließen kann.

In einer Variante, in der der zweite Versorgungsanschluss der dritten Sicherheitsschaltvorrichtung mit dem ersten Versorgungsanschluss der zweiten Sicherheitsschaltvorrichtung verbunden ist, kann die zweite Bypass-Schaltung dazu eingerichtet und ausgebildet sein, die zweite Sicherheitsschaltvorrichtung derart gesteuert zu überbrücken, dass elektrische Energie von der zweiten Energiequelle in die dritte Sicherheitsschaltvorrichtung fließen kann.

In einer Variante, in der der zweite Versorgungsanschluss der dritten Sicherheitsschaltvorrichtung mit dem ersten Versorgungsanschluss der vierten Sicherheitsschaltvorrichtung und der erste Versorgungsanschluss der dritten Sicherheitsschaltvorrichtung mit dem zweiten Versorgungsanschluss der ersten Sicherheitsschaltvorrichtung verbunden ist, kann die zweite Bypass-Schaltung dazu eingerichtet und ausgebildet sein, die zweite und die vierte Sicherheitsschaltvorrichtung derart gesteuert zu überbrücken, dass elektrische Energie von der zweiten Energiequelle in die dritte Sicherheitsschaltvorrichtung fließen kann.

Die zweite Bypass-Schaltung bietet den Vorteil, dass auch bei einer Reihenschaltung von mehreren Sicherheitsschaltvorrichtungen zur Versorgung von Verbrauchern, die keine sicherheitsrelevante Komponente darstellen, hier beispielsweise die dritte und die vierte Sicherheitsschaltvorrichtung, eine zweiseitige Bereitstellung der elektrischen Energie für die sicherheitsrelevante Komponente erfolgen kann. Die zweiseitige Bereitstellung der elektrischen Energie kann dabei insbesondere auch dann erfolgen, wenn eine Fehlfunktion in der vierten Sicherheitsschaltvorrichtung auftritt und keine elektrische Energie durch die vierte Sicherheitsschaltvorrichtung fließen kann. Die Sicherheitsintegrität der sicherheitsrelevanten Komponente bleibt somit erhalten.

Alternativ oder zusätzlich zu der zweiten Bypass-Schaltung kann das System eine dritte Energiequelle aufweisen. Die dritte Energiequelle kann mit dem dritten Versorgungsanschluss der dritten Sicherheitsschaltvorrichtung verbunden sein. Die dritte Energiequelle kann dabei identisch zu der ersten Energiequelle und/oder der zweiten Energiequelle ausgebildet sein. In einer Variante kann die dritte Energiequelle als eine Batterie ausgebildet sein oder eine Batterie umfassen. Die dritte Energiequelle kann in einer Variante als ein DC/DC - Wandler ausgebildet sein oder einen DC/DC- Wandler umfassen.

Die dritte Energiequelle bietet dabei den gleichen Vorteil wie die zweite Bypass-Schaltung, wobei bei einer Anordnung mit einer dritten Energiequelle eine zweiseitige Versorgung der sicherheitsrelevanten Komponente auch dann gewährleistet ist, wenn eine Fehlfunktion in der zweiten Energiequelle auftritt.

Alternativ oder zusätzlich zu der dritten Sicherheitsschaltvorrichtung kann die zweite Sicherheitsschaltvorrichtung zusätzlich einen steuerbaren dritten Versorgungsanschluss aufweisen.

In einer Variante kann die zweite Bypass-Schaltung mit dem dritten Versorgungsanschluss der zweiten Sicherheitsschaltvorrichtung und der zweiten Energiequelle oder der ersten Energiequelle verbunden sein.

In einer weiteren Variante kann das System zwei zweite Bypass-Schaltungen aufweisen, sodass der dritte Versorgungsanschluss der zweiten Sicherheitsschaltvorrichtung mit der zweiten Energiequelle oder der ersten Energiequelle und der dritte Versorgungsanschluss der dritten Sicherheitsschaltvorrichtung mit der zweiten Energiequelle oder der ersten Energiequelle verbunden sein kann.

In einer Variante kann die dritte Sicherheitsschaltvorrichtung zusätzliche mindestens einen steuerbaren zweiten Verbraucheranschluss aufweisen.

Das System kann in einer Variante eine fünfte Sicherheitsschaltvorrichtung aufweisen Die fünfte Sicherheitsschaltvorrichtung kann mindestens einen steuerbaren ersten Versorgungsanschluss aufweisen. Die fünfte Sicherheitsschaltvorrichtung kann mindestens einen steuerbaren Verbraucheranschluss aufweisen. Der erste Versorgungsanschluss der fünften Sicherheitsschaltvorrichtung kann mit dem zweiten Verbraucheranschluss der dritten Sicherheitsschaltvorrichtung verbunden sein.

Das System kann einen fünften Verbraucher aufweisen. Der fünfte Verbraucher kann mit dem Verbraucheranschluss der fünften Sicherheitsschaltvorrichtung verbunden sein. Der fünfte Verbraucher kann als ein Nebenverbraucher ausgebildet sein oder einen Nebenverbraucher umfassen.

Der Anschluss der fünften Sicherheitsschaltvorrichtung an den zweiten Verbraucheranschluss der dritten Sicherheitsschaltvorrichtung ermöglicht insbesondere die Versorgung weiterer nicht-sicherheitsrelevanter Verbraucher, ohne dass in einem Fehlerfall die Sicherheitsintegrität der sicherheitsrelevanten Komponente beeinträchtigt wird, da die fünfte Sicherheitsschaltvorrichtung lediglich selbst als Verbraucher an den zweiten Verbraucheranschluss der dritten Sicherheitsschaltvorrichtung angeschlossen ist und nicht in die Reihenschaltung integriert ist.

Die fünfte Sicherheitsschaltvorrichtung kann zusätzlich mindestens einen steuerbaren zweiten Versorgungsanschluss aufweisen. Der zweite Versorgungsanschluss der fünften Sicherheitsschaltvorrichtung kann mit der zweiten Energiequelle verbunden sein.

Die Verbindung des zweiten Versorgungsanschlusses der fünften Sicherheitsschaltvorrichtung mit der zweiten Energiequelle ermöglicht insbesondere die Versorgung des fünften Verbrauchers bei einer Fehlfunktion der dritten Sicherheitsschaltvorrichtung. Somit kann bei einem Ausfall der dritten Sicherheitsschaltvorrichtung sowohl die Bereitstellung der elektrischen Energie für die sicherheitsrelevante Komponente als auch für die weiteren Verbraucher gewährleistet werden.

In einer Variante kann das System eine sechste Sicherheitsschaltvorrichtung aufweisen. Die sechste Sicherheitsschaltvorrichtung kann mindestens einen steuerbaren ersten Versorgungsanschluss aufweisen. Die sechste Sicherheitsschaltvorrichtung kann mindestens einen steuerbaren zweiten Versorgungsanschluss aufweisen. Die sechste Sicherheitsschaltvorrichtung kann mindestens einen steuerbaren Verbraucheranschluss aufweisen.

Der erste Versorgungsanschluss der sechsten Sicherheitsschaltvorrichtung kann mit dem dritten Versorgungsanschluss der dritten Sicherheitsschaltvorrichtung verbunden sein. Der zweite Versorgungsanschluss der sechsten Sicherheitsschaltvorrichtung kann mit dem dritten Versorgungsanschluss der zweiten Sicherheitsschaltvorrichtung verbunden sein.

Das System kann einen sechsten Verbraucher aufweisen. Der sechste Verbraucher kann mit dem Verbraucheranschluss der sechsten Sicherheitsschaltvorrichtung verbunden sein. Der sechste Verbraucher kann als ein Nebenverbraucher ausgebildet sein oder einen Nebenverbraucher umfassen.

Die Anordnung der sechsten Sicherheitsvorrichtung, bei der der erste Versorgungsanschluss der sechsten Sicherheitsschaltvorrichtung mit dem dritten Versorgungsanschluss der dritten Sicherheitsschaltvorrichtung und der zweite Versorgungsanschluss der sechsten Sicherheitsschaltvorrichtung mit dem dritten Versorgungsanschluss der zweiten Sicherheitsschaltvorrichtung verbunden ist, bietet den Vorteil, dass zusätzliche Verbraucher, hier der sechste Verbraucher, durch das System mit Energie versorgt werden können, ohne dass bei einer Fehlfunktion der sechsten Sicherheitsschaltvorrichtung die Sicherheitsintegrität der sicherheitsrelevanten Komponente beeinträchtigt wird. Darüber hinauf bietet diese Anordnung den Vorteil, dass der sechste Verbraucher auch bei einer Fehlfunktion der zweiten oder der dritten Sicherheitsschaltvorrichtung mit elektrischer Energie versorgt werden kann.

Die vorliegende Offenbarung soll weiter anhand von Figuren erläutert werden. Diese Figuren zeigen schematisch:
- Figur 1: eine schematische Darstellung eines Ersatzschaltbilds einer Sicherheitsschaltvorrichtung;
- Figur 2: eine schematische Darstellung eines Systems zur Versorgung einer sicherheitsrelevanten Komponente gemäß einem ersten Ausführungsbeispiel;
- Figur 3A: ein erstes Fehlerszenario in einem System gemäß dem ersten Ausführungsbeispiel;
- Figur 3B: ein zweites Fehlerszenario in einem System gemäß dem ersten Ausführungsbeispiel;
- Figur 3C: ein drittes Fehlerszenario in einem System gemäß dem ersten Ausführungsbeispiel;
- Figur 3D: ein viertes Fehlerszenario in einem System gemäß dem ersten Ausführungsbeispiel;
- Figur 3E: ein fünftes Fehlerszenario in einem System gemäß dem ersten Ausführungsbeispiel;
- Figur 3F: ein sechstes Fehlerszenario in einem System gemäß dem ersten Ausführungsbeispiel;
- Figur 4: eine schematische Darstellung eines Systems zur Versorgung einer sicherheitsrelevanten Komponente gemäß einem zweiten Ausführungsbeispiel;
- Figur 5: eine schematische Darstellung eines Systems zur Versorgung einer sicherheitsrelevanten Komponente gemäß einem dritten Ausführungsbeispiel;
- Figur 6: eine schematische Darstellung eines Systems zur Versorgung einer sicherheitsrelevanten Komponente gemäß einem vierten Ausführungsbeispiel;
- Figur 7: eine schematische Darstellung eines Systems zur Versorgung einer sicherheitsrelevanten Komponente gemäß einem fünften Ausführungsbeispiel;
- Figur 8: eine schematische Darstellung eines Systems zur Versorgung einer sicherheitsrelevanten Komponente gemäß einem sechsten Ausführungsbeispiel;
- Figur 9: eine schematische Darstellung eines Systems zur Versorgung einer sicherheitsrelevanten Komponente gemäß einem siebten Ausführungsbeispiel;

Im Folgenden werden, ohne hierauf beschränkt zu sein, spezifische Details dargelegt, um ein vollständiges Verständnis der vorliegenden Offenbarung zu liefern. Es ist einem Fachmann jedoch klar, dass die vorliegende Offenbarung in anderen Ausführungsbeispielen verwendet werden kann, die von den nachfolgend dargelegten Details abweichen können. Beispielsweise werden im Folgenden spezifische Konfigurationen und Ausgestaltungen eines Systems beschrieben, die nicht als einschränkend anzusehen sind. Identische Bauteile und Komponenten sind in sämtlichen Figuren mit identischen Bezugszeichen gekennzeichnet.

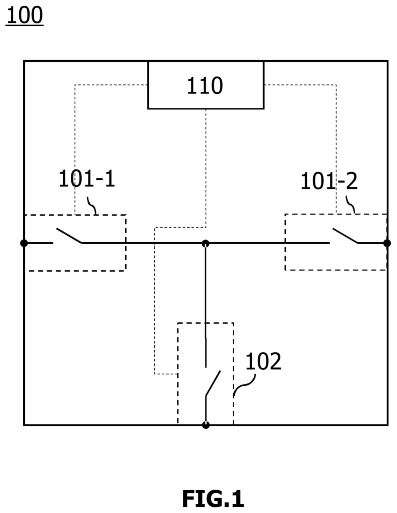

Fig.1 zeigt ein Ersatzschaltbild einer ersten Sicherheitsschaltvorrichtung 100. Die gewählte Darstellung der ersten Sicherheitsschaltvorrichtung 100 dient dabei lediglich zur Erläuterung der einzelnen Komponenten bzw. der einzelnen Funktionalitäten der Komponenten. Die erste Sicherheitsschaltvorrichtung 100 ist dabei nicht auf eine Ausbildung gemäß des Ersatzschaltbildes beschränkt. Die dargestellten Komponenten der ersten Sicherheitsschaltvorrichtung 100 können beispielsweise in einem Ausführungsbeispiel als vollintegriertes Zonensteuergerät ausgebildet sein.

Gemäß dem in Fig. 1 dargestellten Ersatzschaltbild weist die erste Sicherheitsschaltvorrichtung 100 mindestens einen ersten Versorgungsanschluss 101-1, einen zweiten Versorgungsanschluss 101-2 und einen Verbraucheranschluss 102 auf. Die erste Sicherheitsschaltvorrichtung 100 weist weiterhin eine erste Steuerung 110 auf. Der erste Versorgungsanschluss 101-1, der zweite Versorgungsanschluss 101-2 und der Verbraucheranschluss 102 sind als steuerbare Anschlüsse 101-1, 101-2, 102 ausgebildet und separat durch die Steuerung 110 steuerbar. Die Steuerbarkeit der Anschlüsse 101-1, 101-2, 102 ist in dem Ersatzschaltbild jeweils als Schalter in den jeweiligen Anschlüssen 101-1, 101-2, 102 dargestellt.

Die Anschlüsse 101-1, 101-2, 102 sind durch die Steuerung 110 in einen aktiven, leitenden Zustand oder einen inaktiven, nicht-leitenden Zustand steuerbar/bringbar. Die Anschlüsse 101-1, 101-2, 102 sind innerhalb der ersten Sicherheitsschaltvorrichtung 100 derart miteinander verbunden, dass die Anschlüsse 101-1, 101-2, 102 eine Sternschaltung bilden. In einem Zustand der ersten Sicherheitsschaltvorrichtung 100, in dem alle Anschlüsse 101-1, 101-2, 102 durch die Steuerung in einen aktiven und damit leitenden Zustand geschaltet sind, kann elektrische Energie, die beispielsweise an dem ersten Versorgungsanschluss 101-1 aufgenommen wird, an den zweiten Versorgungsanschluss 101-2 und den Verbraucheranschluss 102 weitergeleitet und dort abgegeben werden.

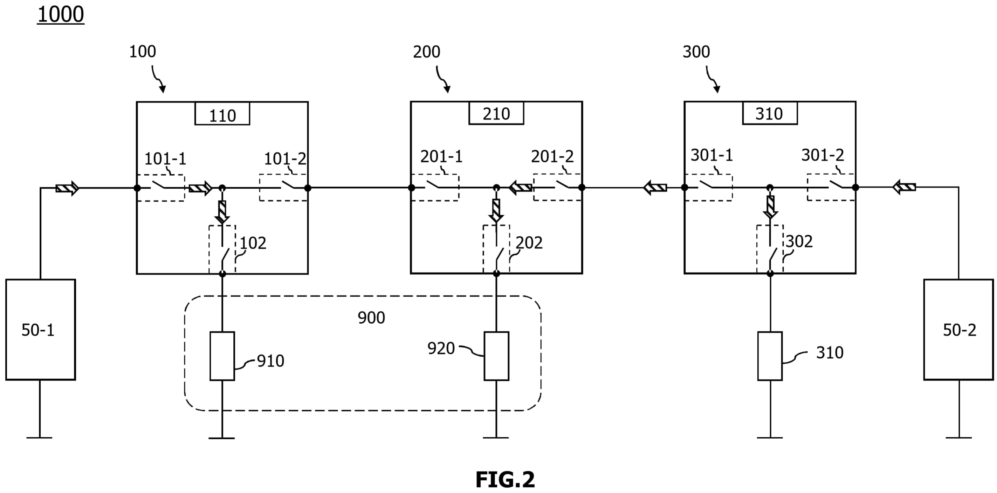

Fig. 2 zeigt eine schematische Darstellung eines Systems 1000 zur Versorgung einer sicherheitsrelevanten Komponente 900 in einem Bordnetz eines Fahrzeugs gemäß einem ersten Ausführungsbeispiel. Das System 1000 weist in dem gezeigten Ausführungsbeispiel drei Sicherheitsschaltvorrichtungen 100, 200, 300 auf. Die drei Sicherheitsschaltvorrichtungen 100, 200, 300 weisen dabei jeweils mindestens einen steuerbaren ersten Versorgungsanschluss 101-1, 201-1, 301-1 und einen steuerbaren zweiten Versorgungsanschluss 101-2, 201-2, 301-2 zur Aufnahme und Weiterleitung elektrischer Energie und mindestens einen steuerbaren Verbraucheranschluss 102, 202, 302 zur Versorgung mindestens eines Verbrauchers 910, 920, 310 auf. Die drei Sicherheitsschaltvorrichtungen 100, 200, 300 weisen weiterhin jeweils eine Steuerung 110, 210, 310 zur Steuerung der jeweiligen Anschlüsse auf. Die Darstellung der Sicherheitsschaltvorrichtungen entspricht der Darstellung des Ersatzschaltbildes gemäß der Fig.1. Diese Darstellung dient auch hier lediglich zur Erläuterung der Funktionsweise und zur Verbesserung der Übersichtlichkeit und beschränkt die Ausbildung der Sicherheitsschaltvorrichtungen nicht auf eine solche Variante.

Die drei Sicherheitsschaltvorrichtungen 100, 200, 300 sind als eine Reihenschaltung angeordnet und derart miteinander verbunden, dass der zweite Versorgungsanschluss 101-2 der ersten Sicherheitsschaltvorrichtung 100 mit dem ersten Versorgungsanschluss 201-1 der zweiten Sicherheitsschaltvorrichtung 200 und der zweite Versorgungsanschluss 201-2 der zweiten Sicherheitsschaltvorrichtung 200 mit dem ersten Versorgunganschluss 301-1 der dritten Sicherheitsschaltvorrichtung 300 verbunden ist.

In alternativen Ausführungsbeispielen können die drei Sicherheitsschaltvorrichtungen 100, 200, 300 als eine Reihenschaltung angeordnet und derart miteinander verbunden sein, dass der zweite Versorgungsanschluss 101-2 der ersten Sicherheitsschaltvorrichtung 100 mit dem ersten Versorgungsanschluss 301-1 der dritten Sicherheitsschaltvorrichtung 300 und der zweite Versorgungsanschluss 301-2 der dritten Sicherheitsschaltvorrichtung 300 mit dem ersten Versorgunganschluss 201-1 der zweiten Sicherheitsschaltvorrichtung 200 verbunden ist.

Das System 1000 weist weiterhin eine erste Energiequelle 50-1 und eine zweite Energiequelle 50-2 auf. Die erste Energiequelle 50-1 ist beispielhaft als eine Batterie ausgebildet und mit dem ersten Versorgungsanschluss 101-1 der ersten Sicherheitsschaltvorrichtung 100 verbunden. Die zweite Energiequelle 50-2 ist beispielhaft als ein DC/DC-Wandler ausgebildet und mit dem zweiten Versorgungsanschluss 301-2 der dritten Sicherheitsschaltvorrichtung 300 verbunden. Die Bereitstellung der elektrischen Energie durch die erste Energiequelle 50-1 und die zweite Energiequelle 50-2 erfolgt dabei als eine zweiseitige Einspeisung. Mit anderen Worten kann gesagt werden, dass die erste Energiequelle 50-1 und die zweite Energiequelle 50-2 in dem System 1000 antiseriell zueinander angeordnet sind. Die erste Energiequelle 50-1 und die zweite Energiequelle 50-2 weisen dabei eine identische Versorgungsspannung auf.

Insbesondere diese antiserielle Anordnung der ersten Energiequelle 50-1 und der zweiten Energiequelle 50-2 und die daraus resultierende zweiseitige Einspeisung der elektrischen Energie ermöglicht eine kontinuierliche Versorgung der sicherheitsrelevanten Komponente 900 beim Auftreten verschiedener Fehlerszenarien, wie in den Fig.3A bis 3F im Detail dargestellt ist.

Das System 1000 weist weiterhin die sicherheitsrelevante Komponente 900 auf. Die sicherheitsrelevante Komponente 900 umfasst in dem gezeigten Ausführungsbeispiel eine sensorgesteuerte Auslösung eines Airbags. In weiteren Ausführungsbeispielen kann die sicherheitsrelevante Komponente 900 beispielsweise eine elektronische Lenkeinrichtung, eine elektronische Motorsteuerung oder ein elektronisches Stabilitätsprogramm umfassen. Die sicherheitsrelevante Komponente 900 ist dabei redundant ausbildet, sodass die sicherheitsrelevante Komponente 900 einen ersten Verbraucher 910 und einen zu dem ersten Verbraucher 910 redundant ausgebildeten zweiten Verbraucher 920 aufweist.

Der erste Verbraucher 910 ist mit dem Verbraucheranschluss 102 der ersten Sicherheitsschaltvorrichtung 100 verbunden und der zweite Verbraucher 920 ist mit dem Verbraucheranschluss 202 der zweiten Sicherheitsschaltvorrichtung 200 verbunden.

Das System 1000 weist weiterhin mindestens einen dritten Verbraucher 310 auf, der mit dem Verbraucheranschluss 302 der dritten Sicherheitsschaltvorrichtung 300 verbunden ist.

Der dritte Verbraucher 310 stellt in dem hier gezeigten Ausführungsbeispiel einen Nebenverbraucher in einem Fahrzeug dar. Ein solcher Nebenverbraucher kann beispielsweise die Ansteuerung der Bremslichter oder die Ansteuerung des Abblendlichts umfassen.

Fig.2 zeigt weiterhin, dargestellt durch die schraffierten Pfeile, den Verlauf der von der ersten Energiequelle 50-1 und der zweite Energiequelle 50-2 bereitgestellten elektrischen Energie in einem fehlerfreien System 1000.

In dem hier gezeigten Ausführungsbeispiel wird die von der ersten Energiequelle 50-1 bereitgestellte elektrische Energie von dem ersten Versorgunganschluss 101-1 der ersten Sicherheitsschaltvorrichtung 100 aufgenommen und über den Verbraucheranschluss 102 abgegeben, sodass der erste Verbraucher 910 der sicherheitsrelevanten Komponente 900 mit elektrischer Energie versorgt wird.

Die von der zweiten Energiequelle 50-2 bereitgestellte elektrische Energie wird von dem zweiten Versorgunganschluss 301-2 der dritten Sicherheitsschaltvorrichtung 300 aufgenommen und sowohl über den ersten Versorgungsanschluss 301-1 als auch über den Verbraucheranschluss 302 der dritten Sicherheitsschaltvorrichtung 300 ausgegeben. Die an dem ersten Versorgungsanschluss 301-1 der dritten Sicherheitsschalteinrichtung 300 ausgegebene elektrische Energie wird von dem zweiten Versorgungsanschluss 201-2 der zweiten Sicherheitsschaltvorrichtung 200 aufgenommen und über den Verbraucheranschluss 202 der zweiten Sicherheitsschaltvorrichtung 200 zur Versorgung des zweiten Verbrauchers 920 der sicherheitsrelevanten Komponente 900 ausgegeben. Die an dem Verbraucheranschluss 302 der dritten Sicherheitsschaltvorrichtung 300 ausgegebene elektrische Energie versorgt den dritten Verbraucher 310.

Fig. 3A zeigt ein erstes Fehlerszenario mit einem Fehler in einem System 1000 gemäß dem in Fig.2 gezeigten ersten Ausführungsbeispiel. Das beispielhafte erste Fehlerszenario zeigt einen Leitungsbruch, dargestellt durch das schraffierte Kreuz, und damit einen Leerlauf zwischen der ersten Sicherheitsschaltvorrichtung 100 und der zweiten Sicherheitsschaltvorrichtung 200, genauer gesagt zwischen der Verbindung des zweiten Versorgungsanschlusses 101-2 der ersten Sicherheitsschaltvorrichtung 100 und dem ersten Versorgungsanschluss 201-1 der zweiten Sicherheitsschaltvorrichtung 200.

Da der erste Verbraucher 910 der sicherheitsrelevanten Komponente 900 durch die erste Sicherheitsschaltvorrichtung 100 und der zweite Verbraucher 920 der sicherheitsrelevanten Komponente 900 durch die zweite Sicherheitsschaltvorrichtung 200 mit elektrischer Energie versorgt wird, führt der in diesem Fehlerszenario gezeigte Fehler weder zu einer Einschränkung der Versorgung der sicherheitsrelevanten Komponente 900 oder des dritten Verbrauchers 310, noch zu einer Erhöhung der Ausfallwahrscheinlichkeit und damit zu einer Reduzierung der Sicherheitsintegrität der sicherheitsrelevanten Komponente 900. Trotz des Fehlers werden die beiden Verbraucher 910, 920 der sicherheitsrelevanten Komponente 900 aus unabhängigen Energiequellen mit elektrischer Energie versorgt.

Der Energiefluss in diesem Fehlerszenario entspricht dem in Fig.2 gezeigten Energiefluss eines intakten Systems 1000.

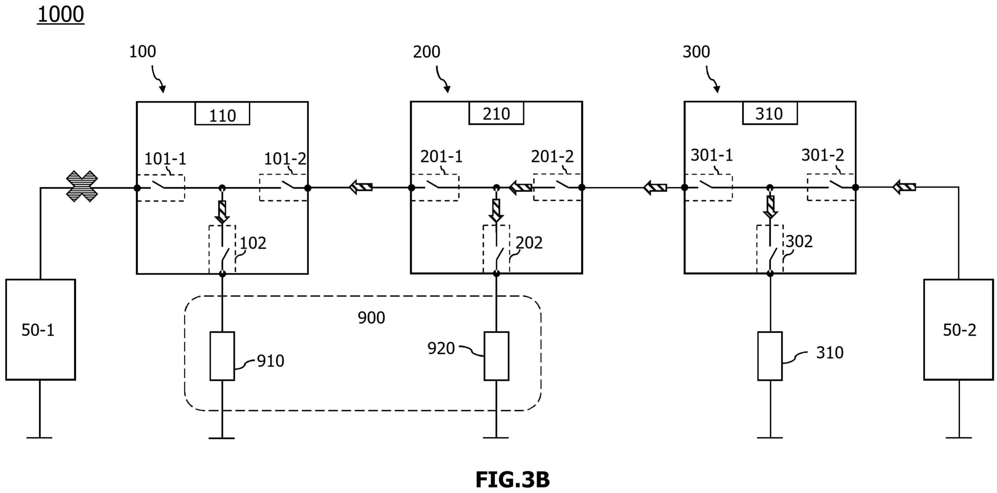

Fig. 3B zeigt ein zweites beispielhaftes Fehlerszenario mit einem Fehler in einem System 1000 gemäß dem ersten Ausführungsbeispiel.

Das zweite Fehlerszenario zeigt einen Leitungsbruch zwischen der ersten Energiequelle 50-1 und dem ersten Versorgungsanschluss 101-1 der ersten Sicherheitsschaltvorrichtung 100.

Der in einem fehlerfreien System 1000 durch die erste Energiequelle 50-1 versorgte erste Verbraucher 910 kann in diesem Fehlerszenario nicht mehr durch die erste Energiequelle 50-1 versorgt werden. Die Versorgung des ersten Verbrauchers 910 wird jedoch durch die zweite Energiequelle 50-2 gewährleistet, indem die elektrische Energie von dem ersten Versorgungsanschluss 201-1 der zweiten Sicherheitsschaltvorrichtung 200 an die erste Sicherheitsschaltvorrichtung 100 abgegeben wird. Die elektrische Energie wird von dem zweiten Versorgungsanschluss 101-2 der ersten Sicherheitsschaltvorrichtung 100 aufgenommen und über den Verbraucheranschluss 102 an den ersten Verbraucher 910 abgegeben.

Somit ist auch in dem hier gezeigten Fehlerszenario eine Versorgung der beiden redundanten Verbraucher 910, 920 der sicherheitsrelevanten Komponente 900 gewährleistet.

Das in Fig.3B dargestellte Fehlerszenario zeigt einen weiteren Vorteil der zweiseitigen Einspeisung durch die erste Energiequelle 50-1 und die zweite Energiequelle 50-2.

In Bordnetzen mit einer hohen Versorgungsspannung, wie z.B. in einem 48V Bordnetz, und einer einseitigen Bereitstellung der elektrischen Energie, führt ein Leitungsbruch zu einem großen Spannungsabfall über dem Leitungsbruch. Ein solcher Spannungsabfall kann dabei zur Bildung eines dauerhaft brennenden Lichtbogens führen, der im schlimmsten Fall zu einem Brand führen kann. Ein solcher Lichtbogen kann dabei durch eine einfache Absicherung in Form z.B. einer Schmelzsicherung nicht erkannt und abgeschaltet werden.

Durch die Bereitstellung der elektrischen Energie als eine zweiseitige Einspeisung liegt auf beiden Seiten des Leitungsbruchs eine nahezu identische Spannung an, sodass ein Lichtbogen wirkungsvoll vermieden wird. Darüber hinaus fließt durch die nahezu identische Spannung auf beiden Seiten des Leitungsbruchs kein Strom und damit keine elektrische Energie mehr in die Leitung mit dem Leitungsbruch. Der Abfall des Stromflusses in der Leitung kann in dem hier gezeigten Ausführungsbeispiel durch eine nicht explizit dargestellte Steuerung in der ersten Energiequelle 50-1 und die Steuerung 110 der ersten Sicherheitsschaltvorrichtung 100 erkannt werden, sodass die erste Energiequelle 50-1 und der erste Versorgungsanschluss 101-1 der ersten Sicherheitsschaltvorrichtung 100 in einen inaktiven Zustand geschaltet werden.

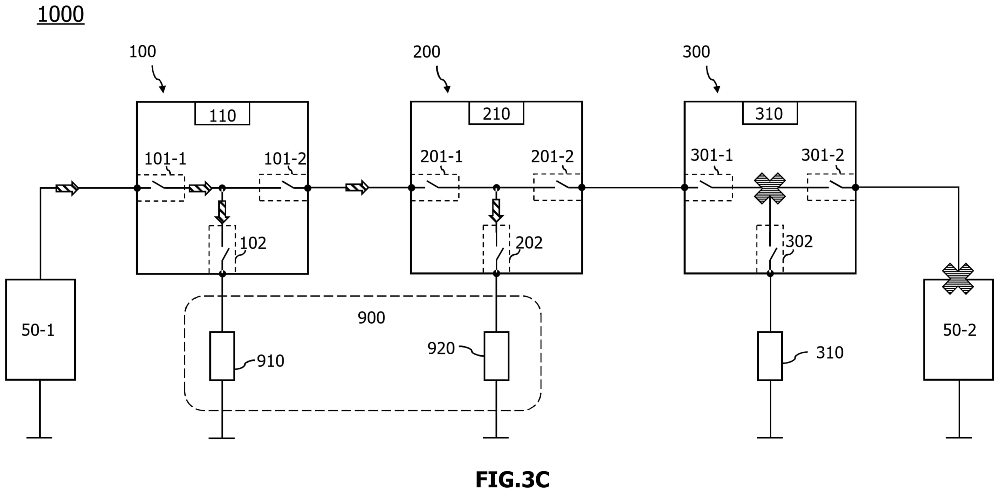

Die Fig. 3C zeigt ein drittes beispielhaftes Fehlerszenario mit zwei Fehler in einem System 1000 gemäß dem ersten Ausführungsbeispiel.

Das dritte Fehlerszenario zeigt einen Ausfall der dritten Sicherheitsschaltvorrichtung 300 und der zweiten Energiequelle 50-2. Ein Ausfall der dritten Sicherheitsschaltvorrichtung 300 ist dabei mit einem Leitungsbruch innerhalb der Sicherheitsschaltvorrichtung 300 gleichzusetzen.

Der zweite Verbraucher 920 der sicherheitsrelevanten Komponente 900, der in einem fehlerfreien System 1000 von der zweiten Energiequelle 50-2 versorgt wird, wird in diesem Fehlerszenario von der ersten Energiequelle 50-1 versorgt, indem die elektrische Energie von dem zweiten Versorgungsanschluss 101-2 der ersten Sicherheitsschaltvorrichtung 100 an die zweite Sicherheitsschaltvorrichtung 200 abgegeben wird. Die elektrische Energie wird von dem ersten Versorgungsanschluss 201-1 der zweiten Sicherheitsschaltvorrichtung 200 aufgenommen und über den Verbraucheranschluss 202 an den zweiten Verbraucher 920 ausgegeben.

Eine Versorgung der beiden redundanten Verbraucher 910, 920 der sicherheitsrelevanten Komponente 900 ist somit auch bei einem Ausfall der zweiten Energiequelle 50-2 oder der dritten Sicherheitsschaltvorrichtung 300 gewährleistet.

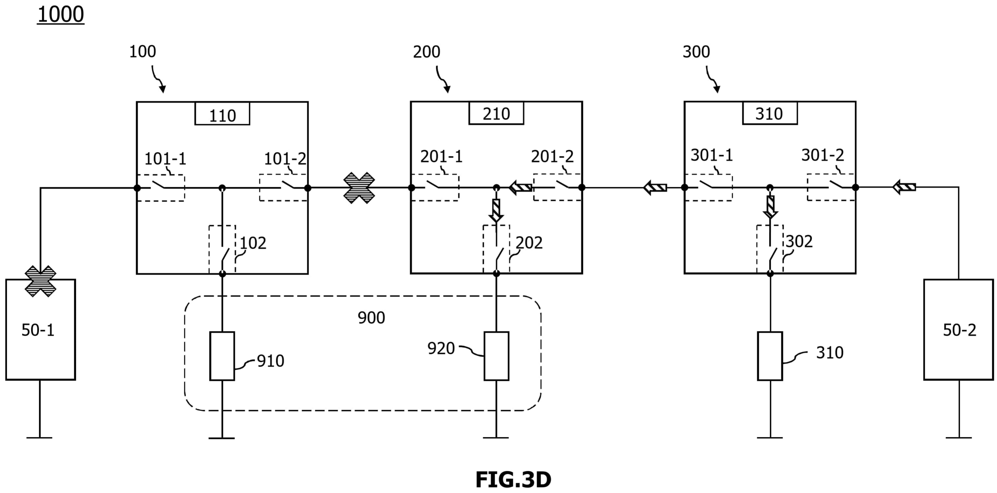

Die Fig. 3D zeigt ein viertes beispielhaftes Fehlerszenario mit zwei Fehlern in einem System 1000 gemäß dem ersten Ausführungsbeispiel.

Das vierte Fehlerszenario zeigt einen Ausfall der ersten Energiequelle 50-1 und einen Leitungsbruch zwischen dem zweiten Versorgungsanschluss 101-2 der ersten Sicherheitsschaltvorrichtung 100 und dem ersten Versorgungsanschluss 201-1 der zweiten Sicherheitsschaltvorrichtung 200.

Eine Versorgung des ersten Verbrauchers 910 ist in dem gezeigten Fehlerszenario nicht mehr möglich. Durch die redundante Ausbildung des ersten Verbrauchers 910 und des zweiten Verbrauchers 920 ist die Funktionalität der sicherheitsrelevanten Komponente 900 jedoch weiterhin gewährleistet, da der zweite Verbraucher 920 weiterhin durch die zweite Energiequelle 50-2 mit elektrischer Energie versorgt wird.

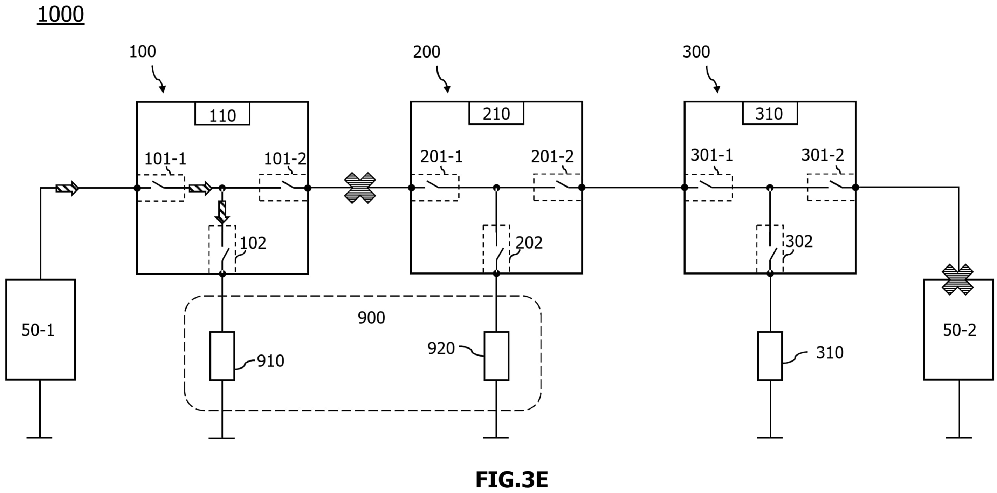

Die Fig. 3E zeigt ein fünftes beispielhaftes Fehlerszenario mit zwei Fehlern in einem System 1000 gemäß dem ersten Ausführungsbeispiel.

Das fünfte Fehlerszenario zeigt einen Ausfall der zweiten Energiequelle 50-2 und einen Leitungsbruch zwischen dem zweiten Versorgungsanschluss 101-2 der ersten Sicherheitsschaltvorrichtung 100 und dem ersten Versorgungsanschluss 201-1 der zweiten Sicherheitsschaltvorrichtung 200.

Eine Versorgung des zweiten Verbrauchers 920 ist in dem hier gezeigten Fehlerszenario nicht mehr möglich. Durch die redundante Ausbildung des ersten Verbrauchers 910 und des zweiten Verbrauchers 920 ist die Funktionalität der sicherheitsrelevanten Komponente 900 jedoch weiterhin gewährleistet, da der erste Verbraucher 910 weiterhin durch die erste Energiequelle 50-1 mit elektrischer Energie versorgt wird.

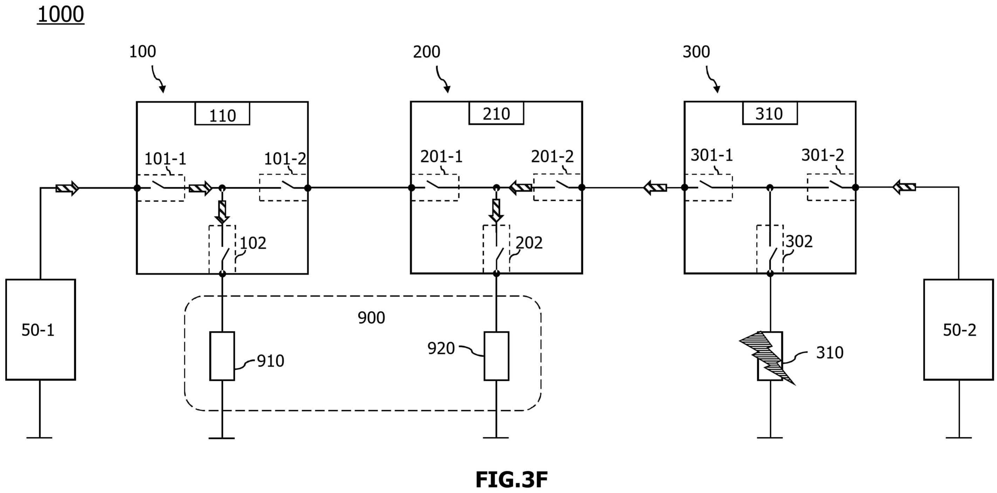

Die Fig. 3F zeigt ein sechstes beispielhaftes Fehlerszenario mit einem Fehler in einem System 1000 gemäß dem ersten Ausführungsbeispiel.

Das sechste Fehlerszenario zeigt einen Kurzschluss in dem dritten Verbraucher 310, dargestellt durch den schraffierten Blitz. Der Kurzschluss in dem dritten Verbraucher 310 würde dazu führen, dass die zweite Energiequelle 50-2 über den defekten dritten Verbraucher 310 kurzgeschlossen wird und keine elektrische Energie in Richtung der sicherheitsrelevanten Komponente 900 abgeben kann. Der Kurzschluss führt dabei insbesondere zu einem sehr hohen Energiefluss durch den Verbraucheranschluss 302 der dritten Sicherheitsschaltvorrichtung 300. Dieser Energiefluss kann von der Steuerung 310 innerhalb der dritten Sicherheitsschaltvorrichtung erkannt werden und die Steuerung 310 kann den Verbraucheranschluss 302 in einen inaktiven Zustand schalten.

Eine Versorgung des ersten Verbrauchers 910 und des zweiten Verbrauchers 920 der sicherheitsrelevanten Komponente 900 ist weiterhin mit einer zweiseitigen Einspeisung aus der ersten Energiequelle 50-1 und der zweiten Energiequelle 50-2 gewährleistet, sodass der Kurzschluss in dem dritten Verbraucher 310 die Ausfallwahrscheinlichkeit der sicherheitsrelevanten Komponente 900 nicht erhöht.

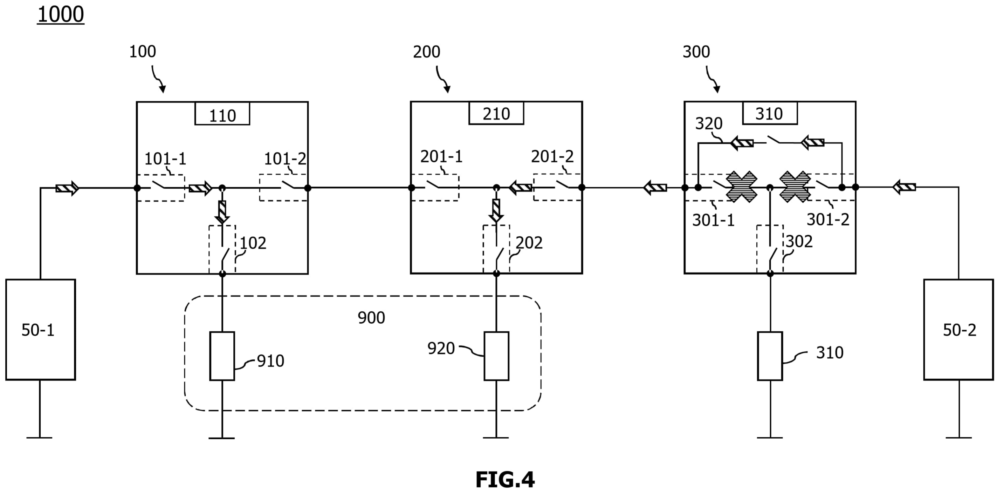

Fig. 4 zeigt eine schematische Darstellung eines Systems 1000 zur Versorgung einer sicherheitsrelevanten Komponente 900 gemäß einem zweiten Ausführungsbeispiel.

Das System 1000 gemäß dem zweiten Ausführungsbeispiel entspricht dem System 1000 gemäß dem in Fig. 2 gezeigten ersten Ausführungsbeispiel, wobei die dritte Sicherheitsschaltvorrichtung 300 eine erste Bypass-Schaltung 320 aufweist.

Die erste Bypass-Schaltung 320 ist dazu eingerichtet und ausgebildet, den ersten und den zweiten Versorgungsanschluss 301-1, 301-2 der dritten Sicherheitsschaltvorrichtung 300 gesteuert zu überbrücken. Die erste Bypass-Schaltung 320 ist dabei jeweils derart mit dem ersten Versorgungsanschluss 301-1 und dem zweiten Versorgungsanschluss 301-2 der dritten Sicherheitsschaltvorrichtung 300 verbunden, dass in einem Fall, in dem der erste Versorgungsanschluss 301-1 und der zweite Versorgunganschluss 301-2 in einen nicht-leitenden Zustand geschaltet sind oder, wie in Fig.4 gezeigt, aufgrund einer Fehlfunktion nicht mehr leitend sind, elektrische Energie von dem ersten Versorgungsanschluss 301-1 zu dem zweiten Versorgunganschluss 301-2 und umgekehrt, und damit durch die dritte Sicherheitsschaltvorrichtung 300 fließen kann.

Eine mit der ersten Bypass-Schaltung 320 in der dritten Sicherheitsschaltvorrichtung 300 identische Bypass-Schaltung kann in weiteren Ausführungsbeispielen alternativ oder zusätzlich auch in der ersten Sicherheitsschaltvorrichtung 100 und/oder der zweiten Sicherheitsschaltvorrichtung 200 ausgebildet sein.

Die erste Bypass-Schaltung 320 in der dritten Sicherheitsschaltvorrichtung bietet dabei insbesondere den Vorteil, dass bei einer Fehlfunktion der dritten Sicherheitsschaltvorrichtung 300 und insbesondere des ersten Versorgungsanschlusses 301-1 und/oder des zweiten Versorgungsanschlusses 301-2 die Sicherheitsintegrität der sicherheitsrelevanten Komponente 900 nicht beeinträchtigt ist.

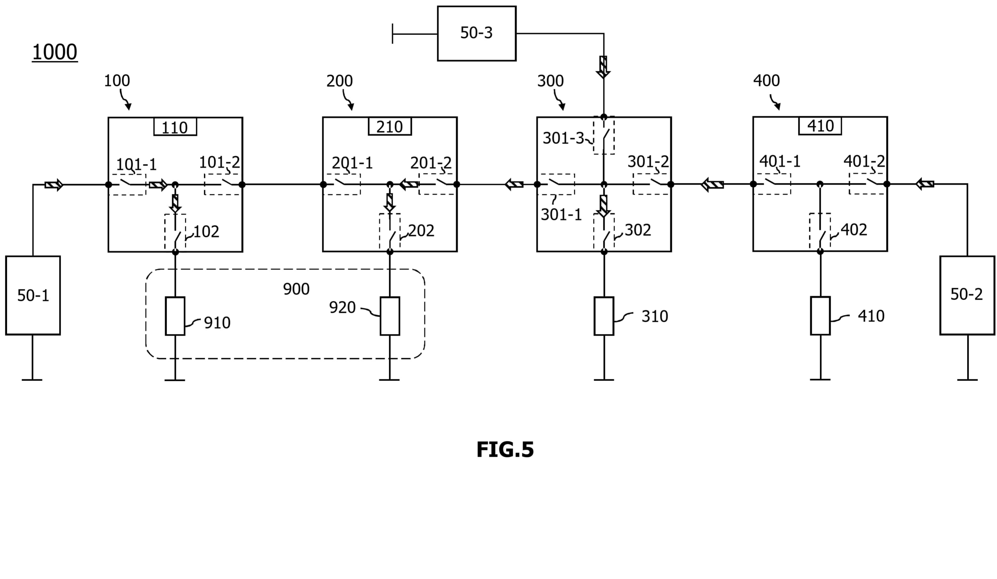

Fig.5 zeigt eine schematische Darstellung eines Systems 1000 zur Versorgung einer sicherheitsrelevanten Komponente 900 gemäß einem dritten Ausführungsbeispiel.

Das System 1000 gemäß dem dritten Ausführungsbeispiel entspricht dem System 1000 gemäß dem in Fig.2 gezeigten ersten Ausführungsbeispiel, wobei die dritte Sicherheitsschaltvorrichtung 300 weiterhin mindestens einen steuerbaren dritten Versorgungsanschluss 301-3 aufweist. Das System 1000 weist weiterhin mindestens eine vierte Sicherheitsschaltvorrichtung 400 mit mindestens einem steuerbaren ersten Versorgungsanschluss 401-1 und einem steuerbaren zweiten Versorgungsanschluss 401-2 und mindestens einem steuerbaren Verbraucheranschluss 402 auf.

Die vierte Sicherheitsschaltvorrichtung 400 ist zwischen der dritten Sicherheitsschaltvorrichtung 300 und der zweiten Energiequelle 50-2 angeordnet, wobei der zweite Versorgungsanschluss 401-2 der vierten Sicherheitsschaltvorrichtung 400 mit der zweiten Energiequelle 50-2 und der erste Versorgungsanschluss 401-1 der vierten Sicherheitsschaltvorrichtung 400 mit dem zweiten Versorgungsanschluss 301-2 der dritten Sicherheitsschaltvorrichtung 300 verbunden ist.

In dem in Fig.5 gezeigten Ausführungsbeispiel ist der zweite Versorgungsanschluss 301-2 der dritten Sicherheitsschaltvorrichtung 300 entsprechend nicht mit der zweiten Energiequelle 50-2 verbunden.

Das System 1000 weist weiterhin eine dritte Energiequelle 50-3 auf, die mit dem dritten Versorgungsanschluss 301-3 verbunden ist. Das System 1000 mit einer vierten Sicherheitsschaltvorrichtung 400 und einem vierten Verbraucher 410, der mit dem Verbraucheranschluss 402 der vierten Sicherheitsschaltvorrichtung 400 verbunden ist, bietet den Vorteil, dass weitere nicht-sicherheitsrelevante Verbraucher durch das System 1000 versorgt werden können. Dies reduziert die Notwendigkeit weiterer Systeme zur Versorgung aller Verbraucher in einem Fahrzeug.

Die dritte Energiequelle 50-3 bietet den Vorteil, dass bei einem Ausfall oder einer Fehlfunktion der vierten Sicherheitsschaltvorrichtung 400 eine zumindest zweitseitige Bereitstellung der Energie für die sicherheitsrelevante Komponente 900 gewährleistet und damit die Sicherheitsintegrität nicht eingeschränkt ist.

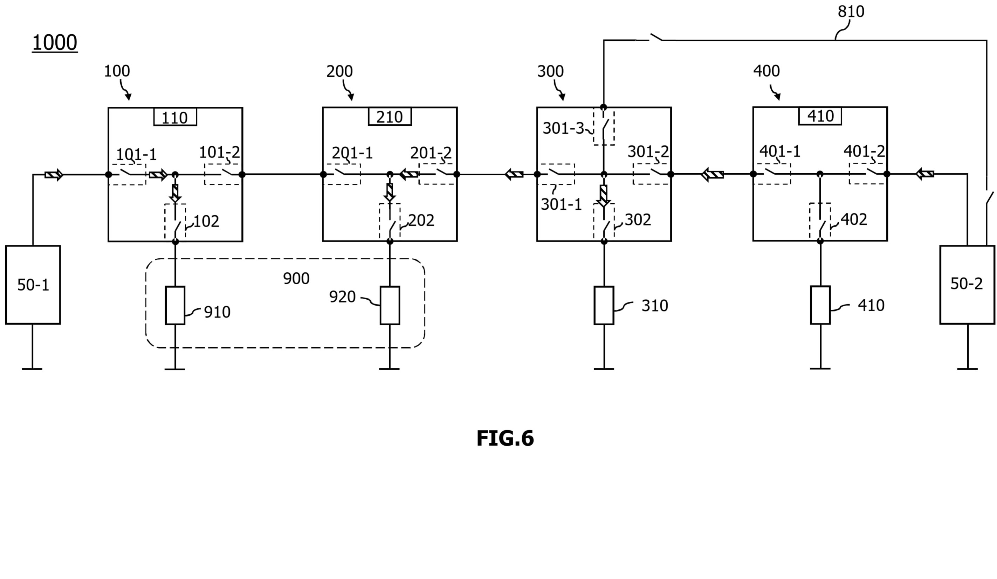

Fig. 6 zeigt eine schematische Darstellung eines Systems 1000 zur Versorgung einer sicherheitsrelevanten Komponente 900 gemäß einem vierten Ausführungsbeispiel.

Das System 1000 gemäß dem vierten Ausführungsbeispiel entspricht dem System 1000 gemäß dem in Fig.5 gezeigten dritten Ausführungsbeispiel, wobei das System 1000 anstelle der dritten Energiequelle 50-3 eine zweite Bypass-Schaltung 810 aufweist.

Die zweite Bypass-Schaltung 810 ist mit dem dritten Versorgungsanschluss 301-3 der dritten Sicherheitsschaltvorrichtung 300 und der zweiten Energiequelle 50-2 verbunden und ist dazu eingerichtet und ausgebildet, die vierte Sicherheitsschaltvorrichtung 400 derart gesteuert zu überbrücken, dass elektrische Energie von der zweiten Energiequelle 50-2 in die dritte Sicherheitsschaltvorrichtung 300 fließen kann.

Dies bietet analog zu der dritten Energiequelle 50-3, wie sie in dem System 1000 gemäß dem dritten Ausführungsbeispiel gezeigt ist, den Vorteil, dass auch bei einem Ausfall der vierten Sicherheitsschaltvorrichtung 400 die zweiseitige Bereitstellung elektrische Energie für die sicherheitsrelevante Komponente 900 gewährleistet ist, wobei durch die zweite Bypass-Schaltung 810 auf eine dritte Energiequelle 50-3 verzichtet werden kann, was wiederum die Komplexität und das Gewicht des Systems 1000 reduziert.

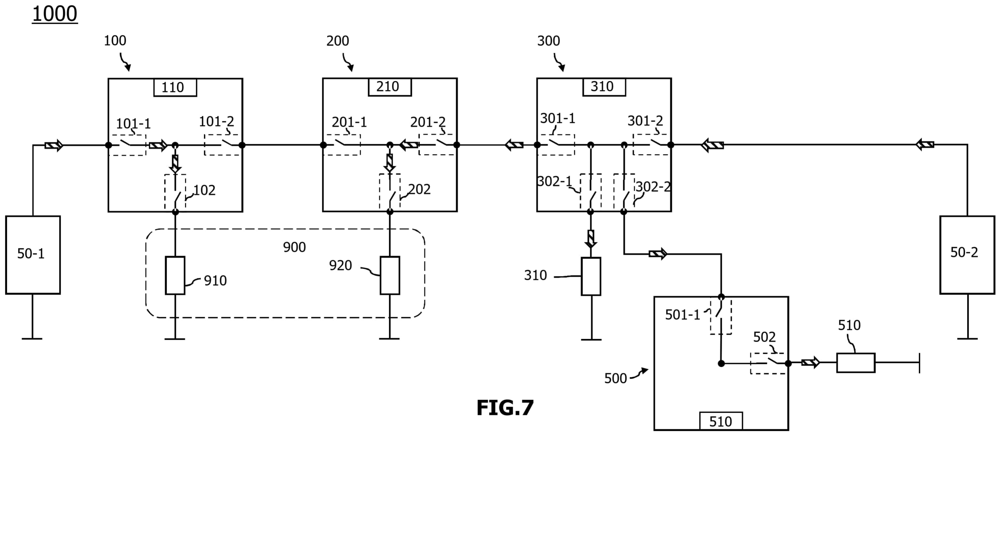

Fig. 7 zeigt eine schematische Darstellung eines Systems 1000 zur Versorgung einer sicherheitsrelevanten Komponente 900 gemäß einem fünften Ausführungsbeispiel.

Das System 1000 gemäß dem fünften Ausführungsbeispiel entspricht dem System 1000 gemäß dem in Fig.2 gezeigten ersten Ausführungsbeispiel, wobei die dritte Sicherheitsschaltvorrichtung 300 weiterhin mindestens einen steuerbaren zweiten Verbraucheranschluss 302-2 aufweist.

Das System 1000 weist weiterhin eine fünfte Sicherheitsschaltvorrichtung 500 mit mindestens einem steuerbaren ersten Versorgungsanschluss 501-1 und mindestens einem steuerbaren Verbraucheranschluss 502 auf. Der erste Versorgungsanschluss 501-1 der fünften Sicherheitsschaltvorrichtung 500 ist mit dem zweiten Verbraucheranschluss 302-2 der dritten Sicherheitsschaltvorrichtung 300 verbunden.

Ein fünfter Verbraucher 510 ist mit dem Verbraucheranschluss 502 der fünften Sicherheitsschaltvorrichtung 500 verbunden.

Die Verbindung der fünften Sicherheitsschaltvorrichtung 500 mit dem zweiten Verbraucheranschluss 302-2 der dritten Sicherheitsschaltvorrichtung 300 ermöglicht insbesondere die Versorgung weiterer nicht-sicherheitsrelevanter Verbraucher, hier des fünften Verbrauchers 510, ohne dass in einem Fehlerfall der fünften Sicherheitsschaltvorrichtung 500 oder des fünften Verbrauchers 510 die Sicherheitsintegrität der sicherheitsrelevanten Komponente 900 beeinträchtigt wird, da die fünfte Sicherheitsschaltvorrichtung 500 lediglich selbst als Verbraucher an die dritte Sicherheitsschaltvorrichtung 300 angeschlossen und nicht in die Reihenschaltung integriert ist.

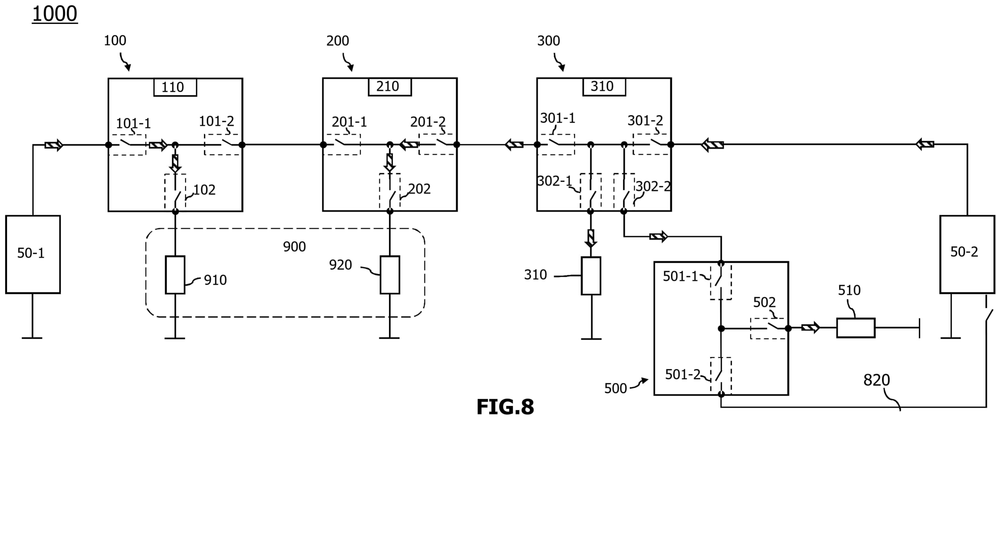

Fig. 8 zeigt eine schematische Darstellung eines Systems 1000 zur Versorgung einer sicherheitsrelevanten Komponente 900 gemäß einem sechsten Ausführungsbeispiel.

Das System 1000 gemäß dem sechsten Ausführungsbeispiel entspricht dem System 1000 gemäß dem in Fig. 7 gezeigten fünften Ausführungsbeispiel, wobei die fünfte Sicherheitsschaltvorrichtung 500 weiterhin mindestens einen steuerbaren zweiten Versorgungsanschluss 501-2-2 aufweist. Der zweite Versorgungsanschluss 501-2 der fünften Sicherheitsschaltvorrichtung 500 ist mit der zweiten Energiequelle 50-2 verbunden.

Die Verbindung des zweiten Versorgungsanschlusses 501-2 der fünften Sicherheitsschaltvorrichtung 500 mit der zweiten Energiequelle 50-2 ermöglicht die Versorgung des fünften Verbrauchers 510 bei einem Ausfall der dritten Sicherheitsschaltvorrichtung 300 bzw. deren zweiten Verbraucheranschlusses 302-2. Durch diese Anordnung wird eine Redundanz der Bereitstellung der elektrischen Energie für den fünften Verbraucher 510 geschaffen.

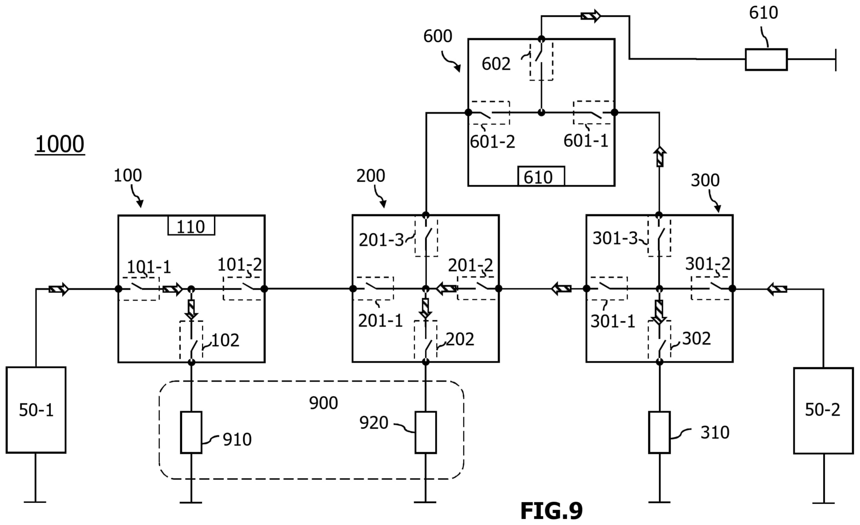

Fig.9 zeigt eine schematische Darstellung eines Systems 1000 zur Versorgung einer sicherheitsrelevanten Komponente 900 gemäß einem siebten Ausführungsbeispiel.

Das System 1000 gemäß dem siebten Ausführungsbeispiel entspricht dem System 1000 gemäß dem in Fig.2 gezeigten ersten Ausführungsbeispiel, wobei die dritte Sicherheitsschaltvorrichtung 300 weiterhin mindestens einen steuerbaren dritten Versorgungsanschluss 301-3 und die zweite Sicherheitsschaltvorrichtung 200 weiterhin mindestens einen steuerbaren dritten Versorgungsanschluss 201-3 aufweist.

Das System 1000 weist weiterhin eine sechste Sicherheitsschaltvorrichtung 600 mit mindestens einem steuerbaren ersten Versorgungsanschluss 601-1 und einem steuerbaren zweiten Versorgungsanschluss 601-2 und mindestens einem steuerbaren Verbraucheranschluss 602 auf. Der erste Versorgungsanschluss 601-2 der sechsten Sicherheitsschaltvorrichtung 600 ist dabei mit dem dritten Versorgungsanschluss 301-3 der dritten Sicherheitsschaltvorrichtung 300 und der zweite Versorgungsanschluss 601-2 der sechsten Sicherheitsschaltvorrichtung 600 mit dem dritten Versorgungsanschluss 201-3 der zweiten Sicherheitsschaltvorrichtung 200 verbunden.

Ein sechster Verbraucher 610 ist an den Verbraucheranschluss 602 der sechsten Sicherheitsschaltvorrichtung 600 angeschlossen.

Das siebte Ausführungsbeispiel zeigt eine weitere mögliche Anordnung einer Sicherheitsschaltvorrichtung zur Versorgung eines weiteren, nicht-sicherheitsrelevanten Verbrauchers, ohne dabei die Sicherheitsintegrität der sicherheitsrelevanten Komponente zu beeinträchtigen.

Durch die Verbindung der sechsten Sicherheitsschaltvorrichtung 600 mit der zweiten Sicherheitsschaltvorrichtung 200 und der dritten Sicherheitsschaltvorrichtung 300 ist insbesondere auch eine zweiseitige Bereitstellung elektrischer Energie für den sechsten Verbraucher 610 gewährleistet, sodass der sechste Verbraucher 610 auch bei einem Ausfall der zweiten Sicherheitsschaltvorrichtung 200 oder der dritten Sicherheitsschaltvorrichtung 300 mit elektrischer Energie versorgt wird.

Die vorangehend beschriebenen Varianten des Systems, dessen Aufbau- und Betriebsaspekte, sowie die Varianten der Verfahrensweise dienen lediglich dem besseren Verständnis der Struktur, der Funktionsweise und der Eigenschaften; sie schränken die Offenbarung nicht etwa auf die Ausführungsbeispiele ein. Die Figuren sind teilweise schematisch. Dabei sind wesentliche Eigenschaften und Effekte zum Teil deutlich vergrößert dargestellt, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Figuren oder im Text offenbart ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Figuren umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Ein System (1000) zur Versorgung mindestens einer sicherheitsrelevanten Komponente (900) in einem Bordnetz eines Fahrzeugs, wobei das System aufweist:
mindestens eine erste Energiequelle (50-1) und eine zweite Energiequelle (50-2) zur Bereitstellung elektrischer Energie;
mindestens eine erste Sicherheitsschaltvorrichtung (100), eine zweite Sicherheitsschaltvorrichtung (200) und eine dritte Sicherheitsschaltvorrichtung (300) mit jeweils mindestens einem steuerbaren ersten Versorgungsanschluss (101-1, 201-1, 301-1) und einem steuerbaren zweiten Versorgungsanschluss (101-2, 201-2, 301-2) zur Aufnahme und Weiterleitung elektrischer Energie und mindestens einem steuerbaren Verbraucheranschluss (102, 202, 302) zur Versorgung mindestens eines Verbrauchers (910, 920, 310);
wobei die Sicherheitsschaltvorrichtungen (100, 200, 300) als eine Reihenschaltung angeordnet und miteinander verbunden sind; und
wobei die zweite Energiequelle (50-2) mit dem zweiten Versorgungsanschluss (201-2) der zweiten Sicherheitsschaltvorrichtung (200) und/oder mit dem zweiten Versorgungsanschluss (301-2) der dritten Sicherheitsschaltvorrichtung (300) und die erste Energiequelle (50-1) mit dem ersten Versorgungsanschluss (101-1) der ersten Sicherheitsschaltvorrichtung (100) derart verbunden sind, dass die Bereitstellung der elektrischen Energie durch die erste Energiequelle (50-1) und die zweite Energiequelle (50-2) als eine zweiseitige Einspeisung erfolgt;
mindestens die sicherheitsrelevante Komponente (900) mit mindestens einem ersten Verbraucher (910) und einem zu dem ersten Verbraucher (910) redundant ausgebildeten zweiten Verbraucher (920), wobei der erste Verbraucher (910) mit dem Verbraucheranschluss (102) der ersten Sicherheitsschaltvorrichtung (100) und der zweite Verbraucher (920) mit dem Verbraucheranschluss (202) der zweiten Sicherheitsschaltvorrichtung (200) und/oder mit dem Verbraucheranschluss (302) der dritten Sicherheitsschaltvorrichtung (300) verbunden ist;
mindestens einen dritten Verbraucher (310), der mit dem Verbraucheranschluss (202) der zweiten Sicherheitsschaltvorrichtung (200) und/oder mit dem Verbraucheranschluss (302) der dritten Sicherheitsschaltvorrichtung (300) verbunden ist.

2. Das System (1000) nach Anspruch 1, wobei die Sicherheitsschaltvorrichtungen (100, 200, 300) derart miteinander verbunden sind, dass der zweite Versorgungsanschluss (101-2) der ersten Sicherheitsschaltvorrichtung (100) mit dem ersten Versorgungsanschluss (201-1) der zweiten Sicherheitsschaltvorrichtung (200) und der zweite Versorgungsanschluss (201-2) der zweiten Sicherheitsschaltvorrichtung (200) mit dem ersten Versorgunganschluss (301-1) der dritten Sicherheitsschaltvorrichtung (300) verbunden ist.

3. Das System (1000) nach Anspruch 1 oder 2, wobei die dritte Sicherheitsschaltvorrichtung (300) eine erste Bypass-Schaltung (320) aufweist, die dazu eingerichtet und ausgebildet ist, den ersten und den zweiten Versorgungsanschluss (301-1, 301-2) der dritten Sicherheitsschaltvorrichtung (300) gesteuert zu überbrücken.

4. Das System (1000) nach einem der vorherigen Ansprüche, wobei die dritte Sicherheitsschaltvorrichtung (300) mindestens einen steuerbaren dritten Versorgungsanschluss (301-3) aufweist.

5. Das System (1000) nach einem der vorherigen Ansprüche, aufweisend:
mindestens eine vierte Sicherheitsschaltvorrichtung (400) mit mindestens einem steuerbaren ersten Versorgungsanschluss (401-1) und einem steuerbaren zweiten Versorgungsanschluss (401-2) und mindestens einem steuerbaren Verbraucheranschluss (402), wobei der zweite Versorgungsanschluss (401-2) der vierten Sicherheitsschaltvorrichtung (400) mit der zweiten Energiequelle (50-2) und/oder mit dem ersten Versorgungsanschluss (201-1) der zweiten Sicherheitsschaltvorrichtung (200) und der erste Versorgungsanschluss (401-1) der vierten Sicherheitsschaltvorrichtung (400) mit dem zweiten Versorgungsanschluss (301-2) der dritten Sicherheitsschaltvorrichtung (300) verbunden ist.

6. Das System (1000) nach Anspruch 4 oder 5 aufweisend:
mindestens eine zweite Bypass-Schaltung (810), die mit dem dritten Versorgungsanschluss (301-3) der dritten Sicherheitsschaltvorrichtung (300) und der zweiten Energiequelle (50-2) verbunden ist; und/oder
eine dritte Energiequelle (50-3), die mit dem dritten Versorgungsanschluss (301-3) der dritten Sicherheitsschaltvorrichtung (300) verbunden ist.

7. Das System (1000) nach einem der vorherigen Ansprüche, wobei die dritte Sicherheitsschaltvorrichtung (300) mindestens einen steuerbaren zweiten Verbraucheranschluss (302-2) aufweist; und wobei das System (1000) aufweist:
mindestens eine fünfte Sicherheitsschaltvorrichtung (500) mit mindestens einem steuerbaren ersten Versorgungsanschluss (501-1) und mindestens einem steuerbaren Verbraucheranschluss (502), wobei der erste Versorgungsanschluss (501-1) der fünften Sicherheitsschaltvorrichtung (500) mit dem zweiten Verbraucheranschluss (302-2) der dritten Sicherheitsschaltvorrichtung (300) verbunden ist.

8. Das System (1000) nach Anspruch 7, wobei die fünfte Sicherheitsschaltvorrichtung (500) mindestens einen steuerbaren zweiten Versorgungsanschluss (501-2) aufweist, der mit der zweiten Energiequelle (50-2) verbunden ist.

9. Das System (1000) nach einem der Ansprüche 4 bis 8, wobei die zweite Sicherheitsschaltvorrichtung (200) mindestens einen steuerbaren dritten Versorgungsanschluss (201-3) aufweist, und wobei das System (1000) aufweist:
mindestens eine sechste Sicherheitsschaltvorrichtung (600) mit mindestens einem steuerbaren ersten Versorgungsanschluss (601-1) und einem steuerbaren zweiten Versorgungsanschluss (601-2) und mindestens einem steuerbaren Verbraucheranschluss (602), wobei der erste Versorgungsanschluss (601-2) der sechsten Sicherheitsschaltvorrichtung (600) mit dem dritten Versorgungsanschluss (301-3) der dritten Sicherheitsschaltvorrichtung (300) und der zweite Versorgungsanschluss (601-2) der sechsten Sicherheitsschaltvorrichtung (600) mit dem dritten Versorgungsanschluss (201-3) der zweiten Sicherheitsschaltvorrichtung (200) verbunden ist.
